# EUROPÄISCHE PATENTSCHRIFT

(11) **EP 1 326 015 B1**
(45) Veröffentlichungstag und Bekanntmachung des Hinweises auf die Patenterteilung: **14.02.2007**
(21) Anmeldenummer: 02028258.8
(22) Anmeldetag: 16.12.2002
(51) Int. Cl.: F02D 9/10

(54) **Drosselklappenstutzen**
Throttle valve housing
Corps de papillon

(30) Priorität: 04.01.2002 DE 10200121
(43) Veröffentlichungstag der Anmeldung: 09.07.2003
(73) Patentinhaber: SIEMENS AKTIENGESELLSCHAFT, 80333 München (DE)
(72) Erfinder: Kohlen, Peter, 61267 Neu-Anspach (DE); von Werder, Martin, 22949 Ammersbek (DE)

(56) Entgegenhaltungen:
- DE-A- 3 044 413
- DE-C- 266 092
- US-A- 1 841 695
- US-A- 2 529 572
- US-A- 3 105 672
- US-A- 4 148 458
- US-A- 5 992 378
- PATENT ABSTRACTS OF JAPAN Bd. 1999, Nr. 10, 31. August 1999 (1999-08-31) & JP 11 132061 A (AISAN IND CO LTD), 18. Mai 1999 (1999-05-18)

## Beschreibung

Die Erfindung bezieht sich auf einen Drosselklappenstutzen mit einem rohrartigen Gehäuse, in dessen durchgehender Durchströmöffnung etwa zylindrischen Querschnitts eine etwa kreisförmige Drosselklappe angeordnet ist, die eine etwa diagonal über die Drosselklappe sich erstreckende, einteilig mit der Drosselklappe ausgebildete, rohrartige Nabe mit einer axial durchgehenden Aufnahmeöffnung aufweist, in der eine Drosselklappenwelle drehfest angeordnet ist, die mit ihren beidseitig aus der Nabe herausragenden Enden in Ausnehmungen in der Wand des Gehäuses drehbar gelagert ist, wobei die Drosselklappenwelle eine quer zu ihrer Längsachse sich erstreckende, durchgehende Stiftbohrung und die Nabe eine zur Stiftbohrung koaxiale, durchgehende Nabenöffnung aufweist, wobei ein Stift fest in die Stiftbohrung eingesetzt ist, mit seinen aus der Stiftbohrung herausragenden Enden die Nabenöffnung durchragt und an zumindest einem seiner aus der Nabenöffnung herausragenden Enden fest mit der Nabe erbunden ist.

Bei derartigen Drosselklappenstutzen ist es bekannt nach dem Einführen der Drosselklappenwelle in die Aufnahmeöffnung eine oder mehrere Schrauben durch entsprechende radiale Öffnungen in der Nabe in zu diesen Öffnungen koaxiale Gewindebohrungen in der Drosselklappenwelle einzuschrauben. Dabei ist insbesondere die Herstellung der Gewindebohrungen aufwendig. Ein Zentrieren der Drosselklappe nach ihrer Anordnung in der Durchströmöffnung des Drosselklappenstutzens ist nicht möglich.

Sowohl aus PATENT ABSTRACTS OF JAPAN Bd. 1999, Nr. 10, 31. August 1999 (1999-08-31) & JP 11 132061 A (AISAN IND CO LTD), 18. Mai 1999 (1999-05-18) als auch aus der US-A-3 105 672 ist ein Drosselklappenstutzen der eingangs genannten Art bekannt. Dabei ist die Drosselklappenwelle ohne Spiel in der Aufnahmeöffnung angeordnet und der Stift durchragt mit seinen aus der Stiftbohrung herausragenden Enden ohne Spiel die Nabenöffnung.

Aufgabe der Erfindung ist es daher einen Drosselklappenstutzen der eingangs genannten Art zu schaffen, der einfach aufgebaut und dessen Drosselklappe in der Durchströmöffnung bei deren Einbau auf einfache Weise zentrierbar ist.

Diese Aufgabe wird erfindungsgemäß dadurch gelöst, dass die Drosselklappenwelle mit Spiel in der Aufnahmeöffnung angeordnet ist und der Stift mit seinen aus der Stiftbohrung herausragenden Enden mit Spiel die Nabenöffnung durchragt.

Sowohl das Spiel, mit dem die Drosselklappenwelle in der Aufnahmeöffnung angeordnet ist als auch das Spiel, das der Stift in der Nabenöffnung besitzt, ermöglichen ein zentriertes Positionieren der Drosselklappe in der Durchströmöffnung, ehe ein oder beide Enden des Stifts fest mit der Nabe verbunden werden. Diese Enden des Stifts sind durch die Durchströmöffnung problemlos zur Befestigung mit der Nabe zugänglich.

Da in den Bauteilen nur einfache Ausnehmungen angeordnet werden müssen und der Stift ein einfach aufgebautes Bauteil ist, ist der Herstellungsaufwand gering.

Zur Vereinfachung des Aufbaus und damit auch der Herstellbarkeit kann die Drosselklappe ein Spritzgussteil sein und die Aufnahmeöffnung einen entlang ihrer Längserstreckung etwa konisch sich erweiternden Querschnitt aufweisen. Das Spritzgussteil kann dabei entweder aus Metall, insbesondere Leichtmetall, oder auch aus einem Kunststoff bestehen.

Durch den konisch sich erweiternden Querschnitt der Aufnahmeöffnung kann auch der Kern zur Herstellung der Aufnahmeöffnung nach dem Spritzgießvorgang leicht entformt werden. Ein Verschwenken der Drosselklappenwelle in der konischen Aufnahmeöffnung wird durch die Verbindung des oder der Enden des Stifts mit der Nabe verhindert.

Dabei ist es sowohl möglich, dass die Aufnahmeöffnung sich von ihrem einen Ende zu ihrem anderen Ende konisch erweiternd ausgebildet ist oder dass die Aufnahmeöffnung etwa von ihrem mittigen Bereich aus jeweils zu ihren Enden hin sich konisch erweitert. In letzterem Fall ist eine Entformung besonders günstig, da die zu entfernenden Kerne keine große Länge besitzen.

Zur einfachen Befestigung des Stiftes in der Stiftbohrung kann der Stift mittels einer Press- oder Übergangspassung fest in die Stiftbohrung eingesetzt sein.

Eine weitere Möglichkeit einen festen Sitz des Stiftes in der Stiftbohrung zu erreichen besteht darin, dass der Stift an der zylindrischen Mantelfläche seines in die Stiftbohrung eingesetzten Bereichs eine Aufrauhung oder Riffelung besitzt.

Nach dem Zentrieren der Drosselklappe in der Durchströmöffnung wird der Stift auf einfache Weise gut zugänglich durch die Durchströmöffnung mit der Nabe verbunden, indem der Stift an einem oder beiden aus der Nabenöffnung herausragenden Enden mit der Nabe verschweißt, verlötet oder verklebt ist.

Dazu kann in einfacher Weise der Stift an einem seiner aus der Nabenöffnung herausragenden Enden einen radial sich erweiternden Flansch besitzen, mit dem er mit dem die Mündung der Nabenöffnung umgebenden Bereich der Nabe in Anlage ist und mit dieser verschweißt, verlötet oder verklebt ist.

Drosselklappe mit Nabe können ein Kunststoffbauteil sein. Ein besonders geringer Herstellungsaufwand ist erforderlich, wenn der sich radial erweiternde Flansch des Stifts aus einem transparenten Kunststoff und die Nabe der Drosselklappe aus einem laserabsorbierenden Kunststoff bestehen und mittels eines den Flansch in Richtung auf die Nabe beaufschlagenden Laserstrahls miteinander verschweißt sind. Dabei kann der Laserstrahl problemlos durch den transparenten Kunststoff, der vorzugsweise ein naturfarbenes Polyamid ist, hindurchtreten und beim Auftreffen auf den einen Laserstrahl absorbierenden Kunststoff der Nabe eine Schmelze im Bereich zwischen Flansch und Nabe erzeugen und so diese beiden Teile miteinander verschweißen. Als laserabsorbierender Kunststoff für die Nabe ist insbesondere ein Polyamid mit 30 % Glasfaser geeignet.

Eine weitere Möglichkeit zur einfachen Verbindung des Stifts mit der Nabe besteht darin, dass auf ein oder beide aus der Nabenöffnung herausragenden Enden des Stifts eine Lochscheibe aufgeschoben ist, die mit dem Stift fest verbunden und an der Nabe fixiert ist.

Dazu wird in einfacher Weise die Lochscheibe mit dem Stift insbesondere mittels Laser verschweißt, verlötet oder verklebt.

Zur Fixierung der Lochscheibe an der Nabe kann in einfacher Weise die Lochscheibe auf ihrer an der Nabe anliegenden Anlagefläche eine Aufrauhung, Riffelung oder Verzahnung aufweisen und mit dieser Anlagefläche mit Vorspannung an einer Auflagefläche der Nabe in Anlage sein.
Diese Fixierung erhält eine erhöhte Sicherheit, wenn auch die Auflagefläche der Nabe eine Aufrauhung, Riffelung oder Verzahnung aufweist.

Eine formschlüssige Fixierung der Lochscheibe an der Nabe wird auf einfache Weise dadurch erreicht, dass die Aufrauhung, Riffelung oder Verzahnung der Auflagefläche durch Aufpressen der Lochscheibe mit ihrer mit einer Aufrauhung, Riffelung oder Verzahnung aufweisenden Anlagefläche auf die durch Anwärmen plastisch verformbar gemachte Auflagefläche der aus Kunststoff bestehenden Nabe erzeugt ist.

Eine dritte, ebenfalls nur geringen Herstellungs- und Montageaufwand erfordernde Ausbildung der Verbindung des Stifts mit der Nabe besteht darin, dass der Stift an seinem einen aus der Nabenöffnung herausragenden Ende einen radial sich erweiternden Flansch besitzt, mit dem er an dem einen die Mündung der Nabenöffnung umgebenden Bereich der Nabe in Anlage ist und dass an dem anderen, aus der Nabenöffnung herausragenden Ende des Stifts eine Feder angeordnet ist, die unter Vorspannung an dem anderen die Mündung der Nabenöffnung umgebenden Bereich der Nabe abgestützt ist. Diese Feder zieht dabei den Stift derart, dass er mit seinem Flansch fest gegen die Nabe verspannt wird.

Zur Erhöhung der Sicherheit dieser Verbindung kann die Anlagefläche des Flanschs an einer Auflagefläche der Nabe mit einer Aufrauhung, Riffelung oder Verzahnung versehen sein und die Auflagefläche der Nabe eine Aufrauhung, Riffelung oder Verzahnung aufweisen.

Entsprechend der zweiten Ausführungsform kann auch bei diesem Ausführungsbeispiel die Aufrauhung, Riffelung oder Verzahnung der Auflagefläche durch Aufpressen der Lochscheibe mit ihrer mit Aufrauhung, Riffelung oder Verzahnung versehenen Anlagefläche auf die durch anwärmen plastisch verformbare Auflagefläche der aus Kunststoff bestehenden Nabe erzeugt sein.

Die Feder besitzt eine einfache, wenig Bauraum benötigende Form und ist leicht montierbar, wenn sie Teller- oder Bügelfeder ist, die mit ihrem mittleren Bereich in einer radial umlaufenden Nut des Stifts angeordnet und mit ihrem äußeren Bereich an der Nabe abgestützt ist.

Ausführungsbeispiele der Erfindung sind in der Zeichnung dargestellt und werden im folgenden näher beschrieben. Es zeigen
- Figur 1: einen Querschnitt durch einen Drosselklappenstutzen,
- Figur 2: eine perspektivische Ansicht einer Drosselklappe,
- Figur 3: einen Ausschnitt eines ersten Ausführungsbeispiels einer Drosselklappe mit Drosselklappenwelle im Querschnitt,
- Figur 4: einen Ausschnitt eines zweiten Ausführungsbeispiels einer Drosselklappe mit Drosselklappenwelle im Querschnitt,
- Figur 5: einen Ausschnitt eines dritten Ausführungsbeispiels einer Drosselklappe mit Drosselklappenwelle im Querschnitt.

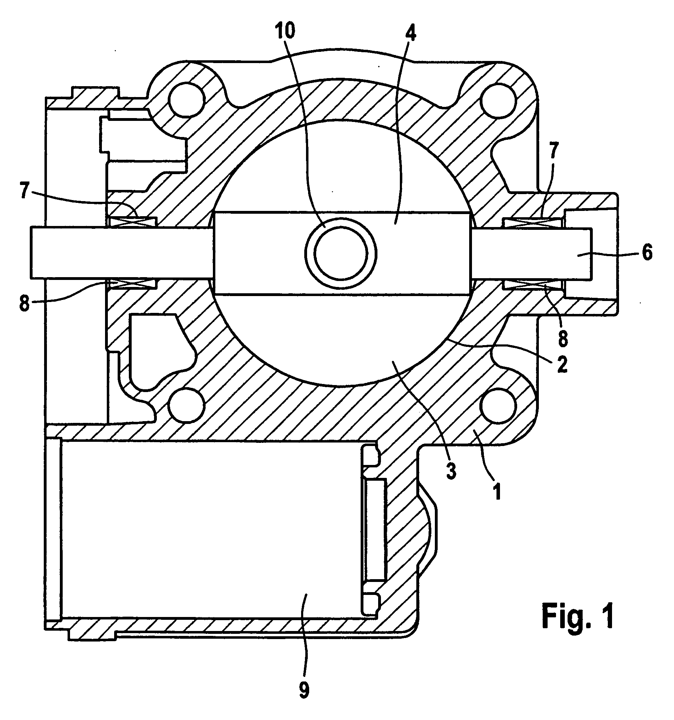

Der in Figur 1 dargestellte Drosselklappenstutzen weist ein Gehäuse 1 mit einer durchgehenden zylindrischen Durchströmöffnung 2 auf, die durch eine kreisförmige Drosselklappe 3 absperrbar ist. Die Drosselklappe 3 ist einteilig mit einer Nabe 4 ausgebildet, die eine axial durchgehende Aufnahmeöffnung 5 besitzt. In der Aufnahmeöffnung 5 ist eine Drosselklappenwelle 6 angeordnet, deren aus der Nabe 4 herausragende Enden in Ausnehmungen 7 in der Wand des Gehäuses 1 ragen und dort in Lagern 8 drehbar gelagert sind.

Eine Kammer 9 des Gehäuses 1 ist zur Aufnahme eines nicht dargestellten Elektromotors vorgesehen, durch den über ein ebenfalls nicht dargestelltes Getriebe die Drosselklappenwelle 6 und damit auch die Drosselklappe 3 zwischen der dargestellten Schließposition und einer Öffnungsposition schwenkbar antreibbar ist.

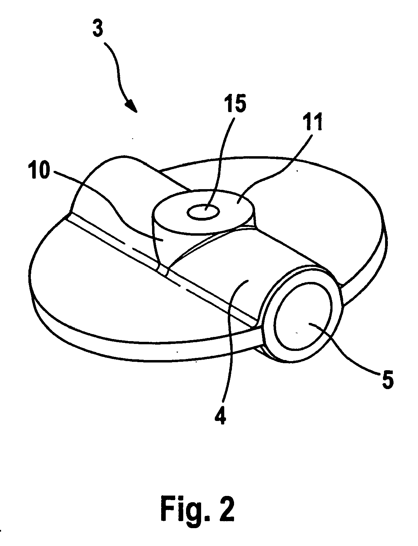

Wie auch in Figur 2 zu sehen, ist die Drosselklappe als Spritzgussteil aus Kunststoff hergestellt und besitzt in ihrem Mittelbereich einen radial gerichteten Ansatz 10 mit einer zur Ebene der Drosselklappe 3 parallelen Auflagefläche 11. Auf der in der Zeichnung verdeckten Rückseite der Drosselklappe 3 besitzt die Nabe 4 koaxial zum Ansatz 10 einen gleichen Ansatz 10.

Rechtwinklig zur Längsachse der Aufnahmeöffnung 5 ist in Nabe 4 und Ansätzen 10 eine durchgehende Nabenöffnung 15 ausgebildet. Nicht zu sehen ist, dass die Aufnahmeöffnung 5 von ihrem mittigen Bereich aus jeweils zu ihren Enden hin sich konisch erweitert, so dass nach dem Spritzvorgang bei der Herstellung der Drosselklappe 3 die Kerne leicht aus der Aufnahmeöffnung 5 entfernt werden können.

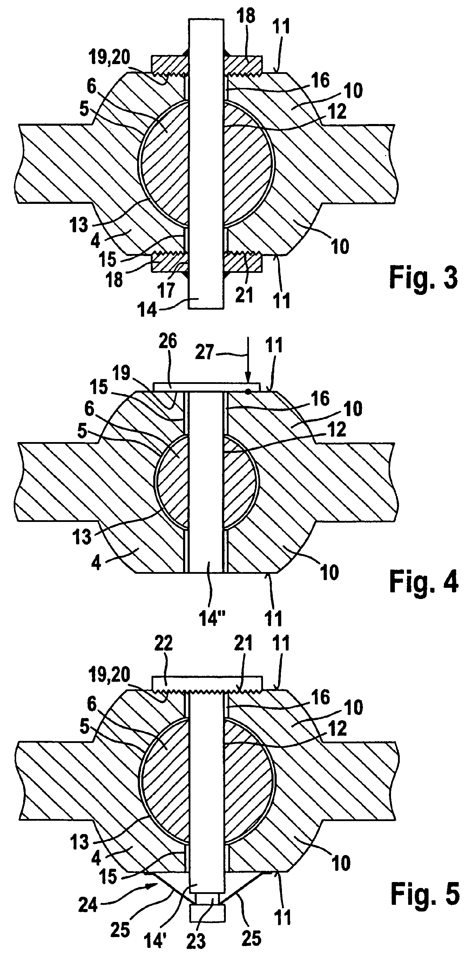

Wie in den Figuren 3 bis 5 zu sehen ist, ist die Drosselklappenwelle 6 mit Spiel 13 in der Aufnahmeöffnung 5 der Drosselklappe 3 angeordnet, was sich aufgrund der konischen Erweiterung zu den Enden der Aufnahmeöffnung 5 hin noch vergrößert.

Koaxial zur Nabenöffnung 15 ist in der Drosselklappenwelle 6 eine Stiftbohrung 12 ausgebildet, in die ein Stift 14, 14' oder 14'' mit Presspassung eingesetzt ist, der in Figur 4 mit einem und in den Figuren 3 und 5 mit beiden freien Enden aus der Nabenöffnung 15 herausragt. Die Nabenöffnung 15 besitzt einen größeren Durchmesser als der Stift 14, 14', 14'', so dass Spiel 16 zwischen Stift 14, 14', 14'' und Nabenöffnung 15 besteht. Damit kann zunächst die Drosselklappe 3 auf der Drosselklappenwelle 6 im Umfang der Spiele 13 und 14 bewegt werden. Dies wird nach Einbau der Drosselklappe in den Drosselklappenstutzen dazu benutzt, die Drosselklappe 3 zentrisch in der Durchströmöffnung 2 zu positionieren und in dieser ausgerichteten Lage dann zu fixieren.

Bei dem Ausführungsbeispiel der Figur 3 erfolgt dies dadurch, dass auf die aus der Nabenöffnung 15 herausragenden Enden des aus Metall bestehenden Stifts 14 mit ihren zentrischen Durchgangsöffnungen 17 Lochscheiben 18 aufgeschoben werden, die auf ihrer an der Auflagefläche 11 der Nabe 4 aufliegenden Anlageflächen 19 mit einer Verzahnung 20 versehen sind. Zuvor wurde die Nabe 4 im Bereich ihrer Auflageflächen 11 durch Erwärmen plastisch verformbar gemacht, so dass nun durch Aufpressen der Lochscheiben 18 auf die Auflageflächen 11 die Verzahnung 20 der Lochscheiben 18 in die Auflageflächen 11 eingeprägt wird und dort eine entsprechende Verzahnung 21 ausbildet.

In dieser Position der auf die Auflageflächen 11 der Nabe 4 aufgepressten Lochscheiben 18, werden die Lochscheiben 18 mittels eines Lasers entlang des umlaufenden Randes ihrer Durchgangsöffnung 17 mit dem Stift 14 verschweißt. Damit ist die Drosselklappe 3 auf der Drosselklappenwelle 6 in zur Durchströmöffnung 2 zentrierter Position fixiert.

In ähnlicher Weise erfolgt bei dem Ausbildungsbeispiel der Figur 5 die Fixierung der Drosselklappe 3 auf der Drosselklappenwelle 6. Der aus Metall bestehende Stift 14' besitzt an seinem einen Ende einen radial sich erweiternden Flansch 22 mit einer Verzahnung 21 an seiner Anlagefläche 19. An seinem anderen aus der Nabenöffnung 15 herausragenden Ende ist der Stift 14' mit einer radial umlaufenden Nut 23 ausgebildet.

Nach dem Anwärmen und plastisch verformbar machen der oberen Auflagefläche 11 der Nabe 4 wird der Stift 14' durch die Nabenöffnung 15 und Stiftbohrung 12 hindurchgeführt und durch Aufpressen mit seiner Verzahnung 20 eine entsprechende Verzahnung 21 an der Auflagefläche 12 erzeugt.

Danach wird eine Bügelfeder 24 mit ihrer zentrischen Bohrung bis zum Einrasten in die Nut 23 auf den Stift 14' aufgeschoben. Dabei gelangt die Bügelfeder 24 mit den Enden ihrer sich etwa radial erstreckenden Federarme 25 unter Vorspannung an der unteren Auflagefläche 11 der Nabe 4 zur Auflage und hält den Flansch 22 mit seiner Verzahnung 20 fest verspannt in der Verzahnung 21 der Auflagefläche 11. Damit ist die Drosselklappe 3 auf der Drosselklappenwelle 6 in zur Durchströmöffnung 2 zentrierter Position fixiert.

Bei dem Ausführungsbeispiel der Figur 4 besteht der Stift 14'' aus einem lasertransparenten Thermoplast und besitzt an seinem einen Ende einen radial sich erweiternden Flansch 26.

Nach Einführen des Stifts 14'' bis zur Anlage der Anlagefläche 14 des Flansches 26 an der Auflagefläche 11 der Nabe 4 und Zentrierung der Drosselklappe 3 in der Durchströmöffnung 2, wird der Flansch 26 von einem Laserstrahl 27 in Richtung auf die Nabe 4 beaufschlagt. Da die Nabe 4 aus einem laserabsorbierenden Thermoplast besteht, kommt es an dem von dem Laserstrahl 27 beaufschlagten Berührungsbereich zwischen Flansch 26 und Nabe 4 zu einer Schmelze der Werkstoffe dieser beiden Teile, so dass diese miteinander verschweißt werden. Damit ist die Drosselklappe 3 auf der Drosselklappewelle 6 in zur Durchströmöffnung 2 zentrierter Position fixiert.

## Patentansprüche

1. Drosselklappenstutzen (3) mit einem rohrartigen Gehäuse, in dessen durchgehender Durchströmöffnung etwa zylindrischen Querschnitts eine etwa kreisförmige Drosselklappe (3) angeordnet ist, die eine etwa diagonal über die Drosselklappe (3) sich erstreckende, einteilig mit der Drosselklappe (3) ausgebildete, rohrartige Nabe (4) mit einer axial durchgehenden Aufnahmeöffnung (5) aufweist, in der eine Drosselklappenwelle (6) drehfest angeordnet ist, die mit ihren beidseitig aus der Nabe (4) herausragenden Enden in Ausnehmungen in der Wand des Gehäuses drehbar gelagert ist, wobei die Drosselklappenwelle (6) eine quer zu ihrer Längsachse sich erstreckende, durchgehende Stiftbohrung (12) und die Nabe (4) eine zur stiftbohrung (12) koaxiale, durchgehende Nabenöffnung (15) aufweist, wobei ein Stift (14) fest in die Stiftbohrung (12) eingesetzt ist, mit seinen aus der Stiftbohrung (12) herausragenden Enden die Nabenöffnung (15) durchragt und an zumindest einem seiner aus der Nabenöffnung (15) herausragenden Enden fest mit der Nabe (4) verbunden ist, **dadurch gekennzeichnet, dass** die Drosselklappenwelle (6) mit Spiel in der Aufnahmeöffnung (5) angeordnet ist und der Stift (14, 14', 14") mit seinen aus der Stiftbohrung (12) herausragenden Enden mit Spiel (16) die Nabenöffnung (15) durchragt, wobei das Spiel mit dem die Drosselklappenwelle (6) in der Aufnahmeöffnung (5) angeordnet ist und auch das Spiel, das der Stift (14, 14', 14") in der Nabeöffnung (5) besitzt, ein zentriertes Positionieren der Drosselklappe (3) in der Durchströmöffnung ermöglichen.

2. Drosselklappenstutzen nach Anspruch 1, **dadurch gekennzeichnet, dass** die Drosselklappe (3) ein Spritzgussteil ist und die Aufnahmeöffnung (5) einen entlang ihrer Längserstreckung etwa konisch sich erweiternden Querschnitt aufweist.

3. Drosselklappenstutzen nach Anspruch 2, **dadurch gekennzeichnet, dass** die Aufnahmeöffnung (5) sich von ihrem einem Ende zu ihrem anderen Ende sich konisch erweiternd ausgebildet ist.

4. Drosselklappenstutzen nach Anspruch 2, **dadurch gekennzeichnet, dass** die Aufnahmeöffnung (5) etwa von ihrem mittigen Bereich aus jeweils zu ihren Enden hin sich konisch erweitert.

5. Drosselklappenstutzen nach einem der vorhergehenden Ansprüche, **dadurch gekennzeichnet, dass** der Stift (14, 14', 14'') mittels einer Press- oder Übergangspassung fest in die Stiftbohrung (12) eingesetzt ist.

6. Drosselklappenstutzen nach einem der Ansprüche 1 bis 5, **dadurch gekennzeichnet, dass** der Stift (14,14',14") an der zylindrischen Mantelfläche seines in die Stiftbohrung (12) eingesetzten Bereichs eine Aufrauhung oder Riffelung besitzt.

7. Drosselklappenstutzen nach einem der vorhergehenden Ansprüche, **dadurch gekennzeichnet, dass** der Stift (14'') an einem oder beiden aus der Nabenöffnung (15) herausragenden Enden mit der Nabe (4) verschweißt, verlötet oder verklebt ist.

8. Drosselklappenstutzen nach Anspruch 7, **dadurch gekennzeichnet, dass** der Stift (14'') an einem seiner aus der Nabenöffnung (15) herausragenden Enden einen radial sich erweiternden Flansch (26) besitzt, mit dem er an dem die Mündung der Nabenöffnung (15) umgebenden Bereich der Nabe (4) in Anlage ist und mit dieser verschweißt, verlötet oder verklebt ist.

9. Drosselklappenstutzen nach einem der vorhergehenden Ansprüche, **dadurch gekennzeichnet, dass** Drosselklappe (3) mit Nabe (4) ein Kunststoffbauteil ist.

10. Drosselklappenstutzen nach den Ansprüchen 8 und 9, **dadurch gekennzeichnet, dass** der sich radial erweiternde Flansch (26) des Stifts (14'') aus einem transparenten Kunststoff und die Nabe (4) der Drosselklappe (3) aus einem laserabsorbierenden Kunststoff bestehen und mittels eines den Flansch (26) in Richtung auf die Nabe (4) beaufschlagenden Laserstrahls (27) miteinander verschweißt sind.

11. Drosselklappenstutzen nach einem der Ansprüche 1 bis 9, **dadurch gekennzeichnet, dass** auf ein oder beide aus der Nabenöffnung (15) herausragenden Enden des Stifts (14) eine Lochscheibe (18) aufgeschoben ist, die mit dem Stift (14) fest verbunden und an der Nabe (4) fixiert ist.

12. Drosselklappenstutzen nach Anspruch 11, **dadurch gekennzeichnet, dass** die Lochscheibe (18) mit dem Stift (14) verschweißt, verlötet oder verklebt ist.

13. Drosselklappenstutzen nach einem der Ansprüche 11 und 12, **dadurch gekennzeichnet, dass** die Lochscheibe (18) auf ihrer an der Nabe (4) anliegenden Anlagefläche (19) eine Aufrauhung, Riffelung oder Verzahnung (20) aufweist und mit dieser Anlagefläche (19) mit Vorspannung an einer Auflagefläche (11) der Nabe (4) in Anlage ist.

14. Drosselklappenstutzen nach Anspruch 13, **dadurch gekennzeichnet, dass** die Auflagefläche (11) der Nabe (4) eine Aufrauhung, Riffelung oder Verzahnung (21) aufweist.

15. Drosselklappenstutzen nach den Ansprüchen 13 und 14, **dadurch gekennzeichnet, dass** die Aufrauhung, Riffelung oder Verzahnung (21) der Auflagefläche (11) durch Aufpressen der Lochscheibe (18) mit ihrer mit eine Aufrauhung, Riffelung oder Verzahnung (20) aufweisenden Anlagefläche (19) auf die durch Anwärmen plastisch verformbar gemachte Auflagefläche (11) der aus Kunststoff bestehenden Nabe (4) erzeugt ist.

16. Drosselklappenstutzen nach einem der Ansprüche 1 bis 6, **dadurch gekennzeichnet, dass** der Stift (14') an seinem einen aus der Nabenöffnung (15) herausragenden Ende einen radial sich erweiternden Flansch (22) besitzt, mit dem er an dem einen die Mündung der Nabenöffnung (15) umgebenden Bereich der Nabe (4) in Anlage ist und dass an dem anderen aus der Nabenöffnung (15) herausragenden Ende des Stifts (14') eine Feder (24) angeordnet ist, die unter Vorspannung an dem anderen die Mündung der Nabenöffnung (15) umgebenden Bereich der Nabe (4) abgestützt ist.

17. Drosselklappenstutzen nach Anspruch 16, **dadurch gekennzeichnet, dass** die Anlagefläche (19) des Flanschs (22) an einer Auflagefläche (11) der Nabe (4) mit einer Aufrauhung, Riffelung oder Verzahnung (20) versehen ist.

18. Drosselklappenstutzen nach Anspruch 17, **dadurch gekennzeichnet, dass** die Auflagefläche (11) der Nabe (4) eine Aufrauhung, Riffelung oder Verzahnung (21) aufweist.

19. Drosselklappenstutzen nach den Ansprüchen 17 und 18, **dadurch gekennzeichnet, dass** die Aufrauhung, Riffelung oder Verzahnung (21) der Auflagefläche (11) durch Aufpressen der des Flanschs mit seiner mit Aufrauhung, Riffelung oder Verzahnung (20) versehenen Anlagefläche (19) auf die durch Anwärmen plastisch verformbar gemachte Auflagefläche (11) der aus Kunststoff bestehenden Nabe (4) erzeugt ist.

20. Drosselklappenstutzen nach Anspruch 16, **dadurch gekennzeichnet, dass** die Feder eine Teller- oder Bügelfeder (24) ist, die mit ihrem mittleren Bereich in einer radial umlaufenden Nut (23) des Stifts (14) angeordnet und mit ihrem äußeren Bereich an der Nabe (4) abgestützt ist.

## Claims

1. Choke valve connection piece (3) having a tubular housing, into the continuous through-flow opening, of approximately cylindrical cross section, whereof an approximately circular choke valve (3) is arranged, this choke valve (3) having a tubular hub (4) which extends approximately diagonally across the choke valve (3), is made in one piece with the choke valve (3), and has an axially continuous receiving opening (5) in which a choke valve shaft (6) is arranged in a manner fixed in rotation, the latter being borne rotatably with its ends, which project out of the hub (4) on both sides, in recesses in the wall of the housing, with the choke valve shaft (6) having a continuous pin bore (12) which extends transversely in relation to its longitudinal axis, and the hub (4) having a continuous hub opening (15) which is coaxial with the pin bore (12), with a pin (14) being inserted in a fixed manner into the pin bore (12), projecting through the hub opening (15) by means of its ends, which project out of the pin bore (12), and being fixedly connected to the hub (4), at least at one of its ends projecting out of the hub opening (15), **characterized in that** the choke valve shaft (6) is arranged in the receiving opening (5) with play, and the pin (14, 14', 14") projects through the hub opening (15) with play (16) by means of its ends projecting out of the pin bore (12), with the play with which the choke valve shaft (6) is arranged in the receiving opening (5) and also the play which the pin (14, 14', 14") has in the hub opening (5) making it possible to arrange the choke valve (3) in a centred position in the through-flow opening.

2. Choke valve connection piece according to Claim 1, **characterized in that** the choke valve (3) is an injection moulded part and the receiving opening (5) has a cross section that widens approximately conically along its longitudinal extent.

3. Choke valve connection piece according to Claim 2, **characterized in that** the receiving opening (5) is constructed to widen conically from its one end to its other end.

4. Choke valve connection piece according to Claim 2, **characterized in that** the receiving opening (5) widens conically approximately from its central region to its respective ends.

5. Choke valve connection piece according to one of the preceding claims, **characterized in that** the pin (14, 14', 14'') is inserted into the pin bore (12) in fixed manner by means of a press fit or transition fit.

6. Choke valve connection piece according to one of Claims 1 to 5, **characterized in that** the pin (14, 14', 14") has a roughened or corrugated portion on the cylindrical outer surface of its region inserted into the pin bore (12).

7. Choke valve connection piece according to one of the preceding claims, **characterized in that** the pin (14") is welded, soldered or adhesively bonded to the hub (4) at one or both ends projecting out of the hub opening (15).

8. Choke valve connection piece according to Claim 7, **characterized in that** the pin (14") has a radially widened flange (26) at one of its ends projecting out of the hub opening (15), by means of which it is in abutment against the region of the hub (4) surrounding the mouth of the hub opening (15) and is welded, soldered or adhesively bonded thereto.

9. Choke valve connection piece according to one of the preceding claims, **characterized in that** the choke valve (3) with the hub (4) is a plastics component.

10. Choke valve connection piece according to Claims 8 and 9, **characterized in that** the radially widened flange (26) of the pin (14") is made of a transparent plastic and the hub (4) of the choke valve (3) is made of a laser-absorbent plastic, and they are welded to one another by means of a laser beam (27) acting on the flange (26) in the direction of the hub (4).

11. Choke valve connection piece according to one of Claims 1 to 9, **characterized in that** a perforated disc (18) is pushed onto one or both ends of the pin which project out of the hub opening (15) and is fixedly connected to the pin (14) and fixed to the hub (4) .

12. Choke valve connection piece according to Claim 11, **characterized in that** the perforated disc (18) is welded, soldered or adhesively bonded to the pin (14).

13. Choke valve connection piece according to either of Claims 11 or 12, **characterized in that** the perforated disc (18) has on its abutment surface (19) abutting against the hub (4) a roughened, corrugated or toothed portion (20) and, by means of this abutment surface (19), is in abutment with pre-tension against a support surface (11) of the hub (4).

14. Choke valve connection piece according to Claim 13, **characterized in that** the support surface (11) of the hub (4) has a roughened, corrugated or toothed portion (21).

15. Choke valve connection piece according to Claims 13 and 14, **characterized in that** the roughened, corrugated or toothed portion (21) of the support surface (11) is produced by pressing the perforated disc (18), by means of its abutment surface (19) having a roughened, corrugated or toothed portion (20), onto the support surface (11) of the hub (4) made of plastic, this support surface (11) having been made plastically deformable by warming.

16. Choke valve connection piece according to one of Claims 1 to 6, **characterized in that** the pin (14') has at its one end projecting out of the hub opening (15) a radially widened flange (22) by means of which it is in abutment against the one region of the hub (4) surrounding the mouth of the hub opening (15), and **in that** there is arranged at the other end of the pin (14') projecting out of the hub opening (15) a spring (24) which is supported with pre-tension against the other region of the hub (4) surrounding the mouth of the hub opening (15).

17. Choke valve connection piece according to Claim 16, **characterized in that** the abutment surface (19) of the flange (22) against a support surface (11) of the hub (4) is provided with a roughened, corrugated or toothed portion (20).

18. Choke valve connection piece according to Claim 17, **characterized in that** the support surface (11) of the hub (4) has a roughened, corrugated or toothed portion (21).

19. Choke valve connection piece according to Claim 17 and 18, **characterized in that** the roughened, corrugated or toothed portion (21) of the support surface (11) is produced by pressing the flange, by means of its abutment surface (19) provided with a roughened, corrugated or toothed portion (20), onto the support surface (11) of the hub (4) made of plastic, this support surface (11) having been made plastically deformable by warming.

20. Choke valve connection piece according to Claim 16, **characterized in that** the spring is a disc spring or bowed spring (24) which is arranged with its central region in a radially peripheral groove (23) in the pin (14) and is supported with its outer region against the hub (4).

## Revendications

1. Tubulure à papillon de régulation des gaz ayant un corps en forme de tube, et dans le conduit traversant d'écoulement des gaz, de section approximativement cylindrique, duquel est monté un papillon d'étranglement (3) approximativement circulaire, qui comporte un moyeu (4) du type tubulaire placé approximativement en diagonale au-dessus du papillon d'étranglement (3) conçu en une seule pièce avec le papillon d'étranglement (3), ledit moyeu ayant une ouverture (5) axiale traversante formant un logement dans lequel est disposé, en blocage de rotation, un arbre (6) du papillon d'étranglement, dont les extrémités faisant saillie hors du moyeu des deux côtés sont suspendues en rotation dans des évidements dans la paroi du corps de la tubulure, l'arbre (6) du papillon d'étranglement comportant, perpendiculairement à son axe longitudinal, un trou (12) traversant destiné à une cheville et le moyeu (4) comportant une ouverture (5) traversante coaxiale avec le trou (12) pour une cheville, une cheville (14) étant insérée fermement dans le trou (12) pour la cheville, dont les extrémités faisant saillie du trou (12) pour la cheville traversent l'ouverture (5) du moyeu et dont au moins l'une de ses extrémités faisant saillie hors de l'ouverture (5) du moyeu est liée fermement au moyeu (4), **caractérisée par le fait que** l'arbre (6) du papillon d'étranglement est disposé avec du jeu dans l'ouverture (5) formant logement et que les extrémités de la cheville (14, 14', 14") faisant saillie hors du trou (12) pour la cheville traversent, avec un jeu (16), l'ouverture (5) du moyeu, où le jeu, avec lequel l'arbre (6) du papillon d'étranglement est disposé dans l'ouverture (5) formant logement et, également, le jeu dont dispose la cheville (14, 14', 14") dans l'ouverture (5) du moyeu, permettent un positionnement centré du papillon d'étranglement (3) dans le conduit d'écoulement des gaz.

2. Tubulure à papillon de régulation des gaz selon la revendication 1, **caractérisée par le fait que** le papillon d'étranglement (3) est une pièce moulée par injection et que l'ouverture (5) formant logement a une section transversale s'agrandissant d'une façon approximativement conique sur toute sa longueur.

3. Tubulure à papillon de régulation des gaz selon la revendication 2, **caractérisée par le fait que** l'ouverture (5) formant logement s'agrandit d'une façon conique en allant de l'une de ses extrémités à son autre extrémité.

4. Tubulure à papillon de régulation des gaz selon la revendication 2, **caractérisée par le fait que** l'ouverture (5) formant logement s'agrandit d'une façon conique en partant approximativement de son milieu vers chacune de ses extrémités.

5. Tubulure à papillon de régulation des gaz selon l'une des revendications précédentes, **caractérisée par le fait que** la cheville (14, 14', 14") est insérée dans le trou (12) pour la cheville au moyen d'un ajustage forcé ou d'un ajustement de transition.

6. Tubulure à papillon de régulation des gaz selon l'une des revendications 1 à 5, **caractérisée par le fait que** la cheville (14, 14', 14") a, sur la surface cylindrique extérieure de sa partie insérée dans le trou (12) pour la cheville, une surface rugueuse ou striée.

7. Tubulure à papillon de régulation des gaz selon l'une des revendications précédentes, **caractérisée par le fait que** la cheville (14") est soudée, brasée ou collée au moyeu (4) à l'une ou aux deux extrémités faisant saillie de l'ouverture (15) du moyeu.

8. Tubulure à papillon de régulation des gaz selon la revendication 7, **caractérisée par le fait que** la cheville (14") comporte, à l'une de ses extrémités faisant saillie de l'ouverture (15) du moyeu, une bride (26) s'agrandissant dans le sens radial, par laquelle elle est appliquée sur la zone du moyeu (4) entourant l'orifice de l'ouverture (15) du moyeu et soudée, brasée ou collée à cette dernière.

9. Tubulure à papillon de régulation des gaz selon l'une des revendications précédentes, **caractérisée par le fait que** le papillon d'étranglement (3) forme un composant en matière plastique avec le moyeu (4).

10. Tubulure à papillon de régulation des gaz selon les revendications 8 et 9, **caractérisée par le fait que** la bride (26) de la cheville (14") s'agrandissant dans le sens radial se compose d'une matière plastique transparente et le moyeu (4) du papillon d'étranglement (3), d'une matière plastique absorbant les rayons laser et sont soudés l'une à l'autre au moyen d'un rayon laser rencontrant la bride (26) dans la direction du moyeu (4).

11. Tubulure à papillon de régulation des gaz selon les revendications 1 à 9, **caractérisée par le fait que**, sur l'une ou sur les deux extrémités de la cheville (14) faisant saillie hors de l'ouverture (15) du moyeu, est enfichée une rondelle percée (18) qui est liée fermement à la cheville (14) et fixée au moyeu (4).

12. Tubulure à papillon de régulation des gaz selon la revendication 11, **caractérisée par le fait que** la rondelle percée (18) est soudée, brasée ou collée à la cheville (14).

13. Tubulure à papillon de régulation des gaz selon l'une des revendications 11 et 12, **caractérisée par** le f ait que la rondelle percée (18) comporte, sur sa surface de contact (19) appliquée sur le moyeu (4), une surface rugueuse, striée ou une denture (20) et qu'elle est appliquée, par cette surface de contact (19), avec une force de précontrainte, sur une surface d'appui (11) du moyeu (4).

14. Tubulure à papillon de régulation des gaz selon la revendication 13, **caractérisée par le fait que** la surface d'appui (11) du moyeu (4) a une surface rugueuse, striée ou une denture (21).

15. Tubulure à papillon de régulation des gaz selon les revendications 13 et 14, **caractérisée par le fait que** la surface rugueuse, striée ou la denture (21) de la surface d'appui (11) est produite en pressant la rondelle percée (18) par sa surface de contact (19) comportant une surface rugueuse, striée ou une denture (20) sur la surface d'appui (11), rendue plastiquement déformable par échauffement, du moyeu (4) composé de matière plastique.

16. Tubulure à papillon de régulation des gaz selon l'une des revendications 1 et 6, **caractérisée par le fait que** la cheville (14') comporte, à l'une de ses extrémités faisant saillie hors de l'ouverture (15) du moyeu, une bride (22) s'agrandissant dans le sens radial, par laquelle elle est appliquée sur la zone du moyeu (4) entourant l'orifice de l'ouverture (15) du moyeu et qu'un ressort (24) est disposé à l'autre extrémité de la cheville (14') faisant saillie hors de l'ouverture (15) du moyeu, ledit ressort s'appuyant, sous une force de précontrainte, sur l'autre zone du moyeu (4) entourant l'orifice de l'ouverture (15) du moyeu.

17. Tubulure à papillon de régulation des gaz selon la revendication 16, **caractérisée par le fait que** la surface de contact (19) de la bride (22) sur une surface d'appui (11) du moyeu (4) est dotée d'une surface rugueuse, striée ou d'une denture (20).

18. Tubulure à papillon de régulation des gaz selon la revendication 17, **caractérisée par le fait que** la surface d'appui (11) du moyeu (4) comporte une surface rugueuse, striée ou une denture (21).

19. Tubulure à papillon de régulation des gaz selon les revendications 17 et 18, **caractérisée par le fait que** la surface rugueuse, striée ou la denture (21) de la surface d'appui (11) est produite en pressant la surface de contact (19) de la bride dotée d'une surface rugueuse, striée ou d'une denture (20) sur la surface d'appui (11), rendue plastiquement déformable par échauffement, du moyeu (4) composé de matière plastique.

20. Tubulure à papillon de régulation des gaz selon la revendication 16, **caractérisée par le fait que** le ressort est une rondelle Belleville ou un ressort en anse de panier, dont la partie centrale est engagée dans une rainure (23) radialement périphérique de la cheville (14) et qui appuie, par sa partie extérieure sur le moyeu (4).
